(19) Europäisches Patentamt
European Patent Office
Office européen des brevets

(11) **EP 4 786 049 A1**

(12) **EUROPEAN PATENT APPLICATION**
published in accordance with Art. 153(4) EPC

(43) Date of publication:
**05.08.2026 Bulletin 2026/32**

(21) Application number: **24872939.4**

(22) Date of filing: **25.09.2024**

(51) International Patent Classification (IPC):
**B01J 35/30** (2024.01)   **B01J 35/56** (2024.01)
**B01J 23/42** (2006.01)   **B01J 23/54** (2006.01)
**B01J 37/00** (2006.01)   **C25B 13/04** (2021.01)
**C25B 1/04** (2021.01)

(52) Cooperative Patent Classification (CPC):
**B01J 23/42; B01J 23/54; B01J 35/30; B01J 35/56;
B01J 37/00; C25B 1/04; C25B 13/04;** Y02E 60/36

(86) International application number:
**PCT/KR2024/014550**

(87) International publication number:
**WO 2025/071231 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 KR 20230130073**

(71) Applicant: **HD Hyundai Oilbank Co., Ltd.
Seosan-si, Chungcheongnam-do 31902 (KR)**

(72) Inventors:
• **KIM, Na Young
  Yongin-si, Gyeonggi-do 16891 (KR)**

• **CHOI, Seung Young
  Yongin-si, Gyeonggi-do 16891 (KR)**
• **AHN, Yeon Ho
  Yongin-si, Gyeonggi-do 16891 (KR)**
• **CHO, Min Sang
  Yongin-si, Gyeonggi-do 16891 (KR)**
• **KIM, Tae Eun
  Yongin-si, Gyeonggi-do 16891 (KR)**

(74) Representative: **Caspary, Karsten et al
Kroher-Strobel
Rechts- und Patentanwälte PartmbB
Bavariaring 20
80336 München (DE)**

(54) **CATALYST COMPOSITE WITH GAS PERMEABILITY REDUCTION EFFECT AND POLYMER ELECTROLYTE MEMBRANE INCLUDING SAME**

(57)    The present invention relates to a catalyst composite and a polymer electrolyte membrane including same, wherein the catalyst composite is manufactured by complexing platinum and a metal having a higher ionization tendency than platinum with a functional support. When applied to a polymer electrolyte membrane, the catalyst composite effectively reduces the gas permeating from the counter electrode.

Pt or Pt–M

FUNCTIONAL SUPPORT

FIG. 1

Processed by Luminess, 75001 PARIS (FR)

**Description**

TECHNICAL FIELD

The present invention relates to a catalyst composite applied to a polymer electrolyte membrane included in a membrane-electrode assembly (MEA) of a water electrolysis device. In particular, the present invention relates to a catalyst composite having the effect of reducing gas permeating from a counter electrode when applied to a polymer electrolyte membrane, by manufacturing the catalyst composite with platinum alone or by complexing platinum and a metal with a greater ionization tendency than platinum together on a functional support, and a polymer electrolyte membrane including the same.

In addition, the present invention relates to a polymer electrolyte membrane included in an MEA of a water electrolysis device. In particular, the present invention relates to a reinforced composite electrolyte membrane for water electrolysis in which the concentration gradients of a hydrogen gas reduction additive and an antioxidant are independently controlled so that the functional additives can operate most efficiently, because the dominant reactions in the electrolyte membrane on the anode side and the electrolyte membrane on the cathode side of the water electrolysis cell are different.

In addition, the present invention relates to a polymer electrolyte membrane included in an MEA of a water electrolysis device. In particular, the present invention relates to a reinforced composite electrolyte membrane for water electrolysis in which the layer design and additive distribution are controlled through the control of the pore size of the reinforcing substrate and the particle size of the additives,
so that the functional additives can operate most efficiently in the water electrolysis cell without an additional coating process.

BACKGROUND ART

Water electrolysis is an environment-friendly hydrogen production technology that splits water to produce hydrogen, and the importance of water electrolysis is increasing as a solution to address environmental problems arising from energy production using fossil fuels. Therefore, research is being conducted on catalysts, electrolyte membranes, electrodes, and separators for the continuous water electrolysis.

In particular, polymer electrolyte membranes must possess high hydrogen ion conductivity while having low electron conductivity. In addition, polymer electrolyte membranes must allow for minimal movement of reaction gases or water relative to ion migration, and possess mechanical and chemical stability.

Recently, polymer electrolyte membranes have been developed to have thinner thicknesses for reasons such as increasing water electrolysis efficiency, reducing raw material costs, and convenience of manufacturing processes. However, while such thinning offers performance advantages, gas permeability through the counter electrode is increased, resulting in reduced durability.

Therefore, there is a need for technological development to reduce gas permeability while maintaining the thin thickness of the polymer electrolyte membranes.

In water electrolysis systems, hydrogen gas permeates from the cathode side to the anode side in a pressurized atmosphere of 30 bar or higher. When the concentration of hydrogen gas crossing over into the oxygen atmosphere in the anode direction exceeds 4%, the risk of explosion increases due to the mixing of oxygen and hydrogen. To prevent explosions, efforts are being made to block hydrogen gas crossover by methods such as adding additives that block hydrogen gas permeation to the electrolyte membrane.

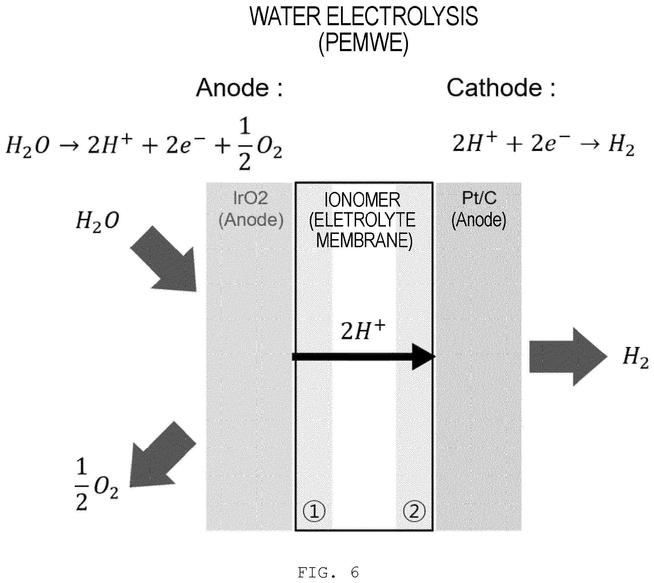

Unlike fuel cell systems, the primary location of degradation is also the electrolyte membrane region near the anode electrode, specifically location ① (FIG. 6), where hydrogen and oxygen are mixed. Unlike fuel cells, degradation caused by radicals has only a minor impact during water electrolysis operation, and only a small amount of degradation occurs in the anode direction. However, the electrolyte membrane region near the cathode electrode, specifically location ② (FIG. 6), is where hydrogen peroxide is generated, and thus, a relatively significant amount of degradation by radicals occurs there.

DETAILED DESCRIPTION OF THE INVENTION

TECHNICAL PROBLEM

The present invention has been conceived to address the above-described issues, and one object of the present invention is to provide a catalyst composite capable of reducing gas permeating from a counter electrode when applied to a polymer electrolyte membrane included in a membrane-electrode assembly (MEA) of a water electrolysis device, and a polymer electrolyte membrane including the same.

In addition, the present invention has been conceived to address the above-described issues, and another object of the present invention is to provide a reinforced composite electrolyte membrane for water electrolysis in which the concentration gradients of a hydrogen gas reduction additive and an antioxidant are independently controlled so that the functional additives can operate most efficiently, because the dominant reaction in the electrolyte membrane on the anode side and the electrolyte membrane on the cathode side of the water electrolysis cell are different.

In addition, the present invention has been conceived to address the above-described issues, and still another object of the present invention is to provide a reinforced composite electrolyte membrane for water electrolysis in which the layer design and additive distribution are controlled through the control of the pore size of the reinforcing substrate and the particle size of the additives, so that the functional additives can operate most efficiently in the water electrolysis cell without an additional coating process.

The technical problems of the present invention are not limited to those mentioned above, and other technical problems that are not mentioned will be clearly understood by one of ordinary skill in the art from the description below.

TECHNICAL SOLUTION

One embodiment of the present invention provides a catalyst composite applied to a polymer electrolyte membrane for water electrolysis, the catalyst composite including:

a catalyst including a platinum-only catalyst or a composite catalyst including platinum and a metal having a greater ionization tendency than platinum; and a functional support on which the catalyst is supported, wherein the functional support is one or more selected from:

a) a support serving as an antioxidant;
b) a support enhancing ion transport properties and catalyst activity;
c) a support enhancing catalyst stability;
d) a support having a function of modifying hydrophilicity or hydrophobicity of the polymer electrolyte membrane;
e) a support having a function of enhancing water-holding capacity; and
f) a support having a three-dimensional mesh structure enhancing durability and long-term stability of the polymer electrolyte membrane.

The metal having a greater ionization tendency than platinum is one or more selected from barium (Ba), magnesium (Mg), aluminum (Al), manganese (Mn), zinc (Zn), chromium (Cr), iron (Fe), cadmium (Cd), cobalt (Co), nickel (Ni), tin (Sn), and lead (Pb), and the metal is complexed with the platinum.

The support a) is one or more selected from $CeO_2$, $Ce_2O_3$, and $LaCeO_7$.

The support b) is one or more selected from YSZ, SDC, LST, BYZ, BCZY, $Gd_2O_3$, $Nd_2O_3$, and $La_2Zr_2O_7$.

The support c) is one or more selected from $IrO_2$, $NiO$, $SnO_2$, and $TiO_2$.

The support e) is a polymer having a network or mesh structure and is a hydrogel polymer or a superabsorbent polymer (SAP).

The functional support has a particle size of 1 $\mu$m or less.

Another embodiment of the present invention provides a method of manufacturing a catalyst composite having a gas permeability reduction effect applied to a polymer electrolyte membrane for water electrolysis, including: a step S100 of grinding a functional support to a particle size of 1 $\mu$m or less; a step S200 of mixing the ground functional support, a platinum precursor, and a metal precursor having a greater ionization tendency than platinum in a specific ratio to form a mixture; and a step S300 of reducing, drying, and heat-treating the mixture to complex the functional support with platinum and the metal having a greater ionization tendency than platinum.

Still another embodiment of the present invention provides an ionomer dispersion including a catalyst composite, the ionomer dispersion including: a solid ionomer; one or more solvents; and the above-described catalyst composite.

The ionomer dispersion has a pH of 3.0 or lower.

The catalyst composite is included in an amount of 0.05% to 5% by weight based on the total weight of the ionomer dispersion.

Yet another embodiment of the present invention provides a polymer electrolyte membrane including: a porous support layer; and an ionomer layer manufactured by impregnating and coating the porous support layer with the above-described ionomer dispersion and then drying the same.

Yet another embodiment of the present invention provides an MEA including the above-described polymer electrolyte membrane and a water electrolysis device including the membrane-electrode assembly.

Meanwhile, yet another embodiment of the present invention provides a reinforced composite electrolyte membrane for water electrolysis, including a first ionomer layer disposed on an anode side, a second ionomer layer disposed on a cathode side, and a composite layer in which a porous substrate interposed between the first ionomer layer and the second ionomer layer is at least partially impregnated with one or more of the first ionomer and the second ionomer, wherein the first ionomer layer and the composite layer each contain a hydrogen gas reduction additive at different concentrations (satisfying B-1 > B > 0 when the concentration in the first ionomer layer is B-1 and the concentration in the composite layer is B), and the second ionomer layer and the composite layer each contain an antioxidant at different concentrations (satisfying B-2 > B > 0 when the concentration in the second ionomer layer is B-2 and the concentration in the composite layer is B).

The first ionomer layer, the second ionomer layer, and the composite layer may each contain a hydrogen gas reduction additive at different concentrations (satisfying B-1 $\geq$ B-2 > B > 0 when the concentration in the first ionomer layer is B-1, the concentration in the second ionomer layer is B-2, and the concentration in the composite layer is B), and the first ionomer layer, the second ionomer layer, and the composite layer may each contain an antioxidant at different concentrations (satisfying B-2 $\geq$ B-1 > B > 0 when the concentration in the first ionomer layer is B-1, the concentration in the second ionomer layer is B-2, and the concentration in the composite layer is B).

The hydrogen gas reduction additive may include a catalyst composite including platinum (Pt) particles and a functional support supporting the platinum particles, or a catalyst composite including platinum (Pt) particles, metal particles having a greater ionization tendency than the platinum (Pt) particles, and a functional support supporting the catalyst.

The antioxidant may include a cerium (Ce)-based radical scavenger, and the cerium (Ce)-based radical scavenger may be cerium oxide.

The composite electrolyte membrane may further include a third ionomer layer formed on an outer surface of the first ionomer layer to be interposed between the anode and the first ionomer layer, and the first ionomer layer, the third ionomer layer, and the composite layer may each contain a hydrogen gas reduction additive at different concentrations (satisfying B-3 $\geq$ B-1 > B > 0 when the concentration in the first ionomer layer is B-1, the concentration in the third ionomer layer is B-3, and the concentration in the composite layer is B).

In addition, the composite electrolyte membrane may further include a fourth ionomer layer formed on an outer surface of the second ionomer layer to be interposed between the cathode and the second ionomer layer, and the second ionomer layer, the fourth ionomer layer, and the composite layer may each contain an antioxidant at different concentrations (satisfying B-2 $\geq$ B-4 > B > 0 when the concentration in the second ionomer layer is B-2, the concentration in the fourth ionomer layer is B-4, and the concentration in the composite layer is B).

The composite electrolyte membrane may further include: a third ionomer layer formed on an outer surface of the first ionomer layer to be interposed between the anode and the first ionomer layer; and a fourth ionomer layer formed on an outer surface of the second ionomer layer to be interposed between the cathode and the second ionomer layer.

In this case, the first ionomer layer, the second ionomer layer, the third ionomer layer, the fourth ionomer layer, and the composite layer may each contain a hydrogen gas reduction additive at different concentrations (satisfying B-3 $\geq$ B-1 $\geq$ B-2 $\geq$ B-4 $\geq$ B > 0 when the concentration in the first ionomer layer is B-1, the concentration in the second ionomer layer is B-2, the concentration in the third ionomer layer is B-3, the concentration in the fourth ionomer layer is B-4, and the concentration in the composite layer is B).

In addition, the first ionomer layer, the second ionomer layer, the third ionomer layer, the fourth ionomer layer, and the composite layer may each contain an antioxidant at different concentrations (satisfying B-2 $\geq$ B-4 $\geq$ B-3 $\geq$ B-1 $\geq$ B > 0 when the concentration in the first ionomer layer is B-1, the concentration in the second ionomer layer is B-2, the concentration in the third ionomer layer is B-3, the concentration in the fourth ionomer layer is B-4, and the concentration in the composite layer is B).

The composite layer may be a composite layer in which one or more of the first ionomer and the second ionomer are at least partially impregnated into at least two stacked porous substrates interposed between the first and second ionomer layers.

In this case, the porous substrate may include at least one fluorinated polymer, and the fluorinated polymer may be polytetrafluoroethylene (PTFE), poly(ethylene-co-tetrafluoroethylene) (EPTFE), expanded polytetrafluoroethylene (e-PTFE), polyvinylidene fluoride (PVDF), expanded polyvinylidene fluoride (e-PVDF), expanded poly(ethylene-co-tetrafluoroethylene) (eEPTFE), or a mixture thereof.

The composite layer may include at least one ionomer inner layer interposed between at least two porous substrates, and the ionomer inner layer may have the same composition as the first ionomer layer or the second ionomer layer.

The above-described reinforced composite electrolyte membrane for water electrolysis according to one embodiment of the present can be applied to a membrane-electrode assembly (MEA) for water electrolysis or a water electrolysis system including the same.

Meanwhile, yet another embodiment of the present invention provides a reinforced composite electrolyte membrane for water electrolysis, including a first ionomer layer formed of a first ionomer composition disposed on an anode side and a composite layer in which the first ionomer composition is at least partially impregnated into a porous substrate stacked on one surface of the first ionomer layer, wherein the first ionomer composition includes a hydrogen gas reduction additive, and the hydrogen gas reduction additive includes a first additive having a particle size smaller than the maximum pore size of the porous substrate and a second additive having a particle size larger than the maximum pore size, wherein the first additive is impregnated into the porous substrate and positioned within the composite layer, and the second additive is positioned within the first ionomer layer.

The reinforced composite electrolyte membrane for water electrolysis may further include an intermediate layer interposed between the first ionomer layer and the composite layer and formed of the first ionomer composition, wherein the second additive in the composition is densely packed at a higher concentration compared to the first additive.

The hydrogen gas reduction additive may include a composite including platinum (Pt) particles and a functional support supporting the platinum particles, or a composite including platinum (Pt) particles, a catalyst including metal particles having a greater ionization tendency than the platinum (Pt) particles, and a functional support supporting the catalyst.

The particle size (diameter size) of the hydrogen gas reduction additive corresponding to a particle size distribution greater than 0 and less than or equal to X is less than or equal to the maximum pore size of the porous substrate, and X may be 50 to 80.

The reinforced composite electrolyte membrane for water electrolysis may further include a second ionomer layer disposed on a cathode side, formed of a second ionomer composition, and stacked on the other side of the porous substrate, which is a side opposite to the side where the first ionomer layer is stacked, so that the second ionomer composition is at least partially impregnated into the porous substrate.

The composite layer may be a composite layer in which one or more of the first ionomer composition and the second ionomer composition are at least partially impregnated into at least two stacked porous substrates interposed between the first and second ionomer layers.

The porous substrate may include at least one fluorinated polymer, and the fluorinated polymer may be polytetrafluoroethylene (PTFE), poly(ethylene-co-tetrafluoroethylene) (EPTFE), expanded polytetrafluoroethylene (e-PTFE), polyvinylidene fluoride (PVDF), expanded polyvinylidene fluoride (e-PVDF), expanded poly(ethylene-co-tetrafluoroethylene) (eEPTFE), or a mixture thereof.

The composite layer may include at least one ionomer inner layer interposed between at least two porous substrates, and the ionomer inner layer may be formed of the first ionomer composition or the second ionomer composition.

The above-described reinforced composite electrolyte membrane for water electrolysis according to one embodiment of the present can be applied to an MEA or a water electrolysis system including the same.

Meanwhile, yet another embodiment of the present invention provides a method of manufacturing a reinforced composite electrolyte membrane for water electrolysis, including: a step of preparing a porous substrate by controlling the average pore size and the maximum pore size; and a hydrogen gas reduction additive including a first additive having a particle size smaller than the maximum pore size of the porous substrate and a second additive having a particle size larger than the maximum pore size; a step of preparing a first ionomer composition in which a first mixture including the hydrogen gas reduction additive and a first ionomer is dispersed in a solvent; a step of applying the first ionomer composition to form a first ionomer layer; and
a step of attaching the porous substrate to one surface of the first ionomer layer to form a composite layer in which the first ionomer composition is at least partially impregnated into the porous substrate using a capillary effect.

In the steps of preparing the porous substrate and the hydrogen gas reduction additive, the particle size (diameter size) of the hydrogen gas reduction additive corresponding to a particle size distribution greater than 0 and less than or equal to X is less than or equal to the maximum pore size of the porous substrate, and X may be 50 to 80.

In the step of forming a composite layer, the first additive is contained in the first ionomer composition and impregnated into an interior of the porous substrate, and the second additive is densely packed at an interface between the porous substrate and the first ionomer layer, so that an intermediate layer, which is interposed between the first ionomer layer and the composite layer and in which the second additive is densely packed at a higher concentration in the first ionomer composition compared to the first additive, may be formed.

After the step of forming the composite layer, the method may further include a step of applying a second ionomer composition, in which a second mixture including a second ionomer is dispersed in a solvent, to the other side of the porous substrate, which is a side opposite to the side on which the first ionomer layer is stacked.

In this case, in the step of applying the second ionomer composition, the second ionomer composition may be at least partially impregnated into the porous substrate.

The present invention also provides a reinforced composite electrolyte membrane for water electrolysis manufactured by the above-described manufacturing method.

ADVANTAGEOUS EFFECTS

According to the present invention as described above, the catalyst composite according to the present invention is manufactured by complexing platinum and a metal having a greater ionization tendency than platinum with a functional support, and thus, when applied to a polymer electrolyte membrane, the catalyst composite reduces gas permeation from a counter electrode, thereby ultimately increasing the durability of the polymer electrolyte membrane.

Furthermore, by manufacturing the manufacture the catalyst composite by first grinding the functional support to a nano-level of 1 μm or less and then mixing the ground functional support with a metal precursor that serves as a catalyst, the present invention can minimize the detachment of the catalyst from the functional support and has excellent dispersion stability even within an ionomer dispersion.

Furthermore, by manufacturing the polymer electrolyte membrane by adjusting the pH of the ionomer dispersion including the catalyst composite to a certain level, the present invention prevents wrinkling, cracking, and breakage of the manufactured polymer electrolyte membrane.

According to the present invention as described above, in order to maximize the management of degradation and explosion risks in a water electrolysis system, the hydrogen gas reduction additive is positioned primarily on an anode side to prevent hydrogen at concentrations exceeding a certain level from mixing with oxygen, while the antioxidant is positioned primarily on a cathode side to ensure effective radical removal.

According to the present invention as described above, even without performing additional layer coating processes, the functional additive for reducing hydrogen gas permeability can be positioned in the most efficient position by controlling the particle size of the additives and the pore size of the porous substrate based on existing processes, thereby ensuring cell performance and safety.

The effects of the present invention are not limited to those mentioned above, and include other effects that are clearly understood by a person skilled in the art from the description throughout the specification but are not explicitly mentioned.

DESCRIPTION OF THE DRAWINGS

FIG. 1 shows a schematic diagram illustrating a catalyst composite according to the present invention.

FIG. 2 shows a diagram illustrating examples of functional supports that may be applied to the catalyst composite according to the present invention; the top shows an example of support e) having a network or reticular structure, and the bottom shows an example of support f) having a lattice or three-dimensional mesh structure.

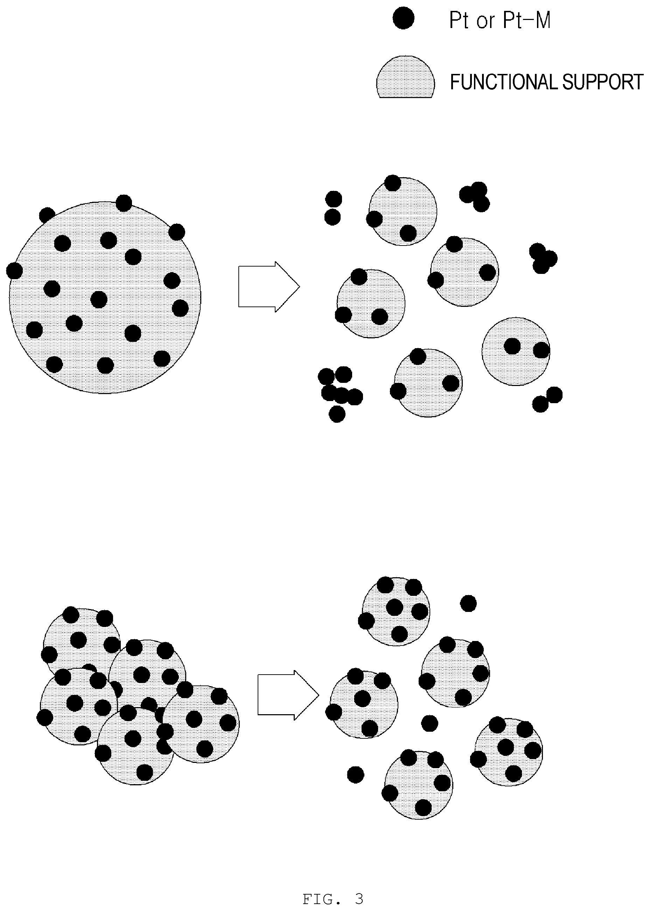

FIG. 3 shows a schematic diagram for explaining the effects of the method of manufacturing the catalyst composite according to the present invention; the top shows a case where the functional support is used without grinding, illustrating significant detachment of the catalyst (Pt, Pt-M) during the manufacturing process of the polymer electrolyte membrane, such as the dispersion process, and the bottom shows a case where the functional support is used after grinding, illustrating minimized detachment of the catalyst (Pt, Pt-M) during the manufacturing process of the polymer electrolyte membrane, such as the dispersion process.

FIG. 4 shows a flowchart illustrating the method of manufacturing the catalyst composite according to the present invention.

FIG. 5 shows a schematic diagram illustrating that polymer materials easily undergo volumetric changes due to pH (sensitivity to volume change according to pH).

FIG. 6 shows a schematic diagram illustrating a polymer electrolyte membrane-based water electrolysis (PEMWE) system.

FIG. 7 shows a schematic diagram illustrating a polymer electrolyte membrane-based fuel cell (PEMFC) system.

FIG. 8 shows a schematic diagram illustrating of a reinforced composite electrolyte membrane for water electrolysis according to one preferred embodiment of the present invention.

FIG. 9 shows a schematic diagram illustrating a reinforced composite electrolyte membrane for water electrolysis according to another preferred embodiment of the present invention.

FIG. 10 shows a schematic diagram illustrating a cross-sectional structure of an electrolyte membrane according to one embodiment of the present invention and the behavior of a hydrogen gas reduction additive according to the particle size during a composite layer formation process.

FIG. 11 shows a conceptual diagram illustrating a flux difference between hydrogen gas and oxygen gas in an electrolyte membrane thickness direction.

FIG. 12 is a cross-sectional photograph showing an electrolyte membrane according to a preferred embodiment of the present invention (left) and an energy dispersive spectroscopy (EDS) component analysis image of a rectangular area thereof (right).

FIG. 13 shows a conceptual diagram illustrating a manufacturing process performed when two layers of a polymer material are stacked through a roll-to-roll (RTR) process.

BEST MODE

Hereinafter, preferred embodiments of the present invention will be described in detail with reference to the accompanying drawings. The advantages and features of the present invention and methods for achieving them will become apparent with reference to the embodiments described in detail below together with the accompanying drawings. However, the present invention is not limited to the embodiments disclosed below, but may be implemented in various different forms, and the present embodiments are provided only to make the disclosure of the present invention complete and to fully inform those skilled in the art of the scope of the invention, and the present invention is defined only by the scope of the claims. The same reference numerals refer to the same elements throughout the specification

Unless otherwise defined, all terms (including technical and scientific terms) used herein may be used as the same meaning as generally understood by one of ordinary skill in the art to which the present invention pertains. In addition, terms defined in commonly used dictionaries are not interpreted in an idealized or overly formal sense unless clearly so defined in the present invention. The terminology used herein is for the purpose of describing embodiments only and is not intended to limit the present invention. Singular forms used herein include plural forms, unless the context clearly indicates otherwise.

"Comprise" and/or "comprising" used herein specify(ies) the presence of mentioned components, steps, operations, and/or devices do(es) not preclude the possibility of the presence or addition of one or more other components, steps, operations, and/or devices.

The present invention relates to (1) a catalyst composite having a gas permeability reduction effect applied to a polymer electrolyte membrane-based water electrolysis (PEMWE) system, that is, a polymer electrolyte membrane (PEM)-based water electrolysis (WE) system, (2) an electrolyte membrane structure in which the concentration gradients of a hydrogen gas reduction additive and an antioxidant are independently controlled, and (2) an electrolyte membrane structure and process in which layer design and additive distribution are controlled through the control of the pore size of a reinforced substrate and the particle size of additives. Hereinafter, the former (1) is described first.

### <(1) Catalyst composite with gas permeability reduction effect>

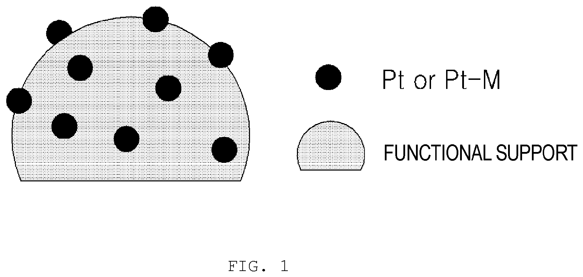

FIG. 1 shows a schematic diagram illustrating a catalyst composite according to one embodiment of the present invention, and as illustrated in FIG. 1, the catalyst composite according to the present invention includes a platinum (Pt) single catalyst or a composite catalyst including platinum and a metal (M) having a greater ionization tendency than platinum; and a functional support on which the single catalyst or composite catalyst is supported.

Specifically, the metal having a greater ionization tendency than platinum may be one or more selected from barium (Ba), magnesium (Mg), aluminum (Al), manganese (Mn), zinc (Zn), chromium (Cr), iron (Fe), cadmium (Cd), cobalt (Co), nickel (Ni), tin (Sn), and lead (Pb). When such a metal with a high ionization tendency is included, the medal is oxidized prior to platinum and thus exhibits an effect of reducing the oxidation of platinum.

More specifically, as shown in FIG. 1, the catalyst is composed of both platinum (Pt) and a metal in the form of Pt-M (a metal with a greater ionization tendency than platinum) in which platinum and the above-described metal (M) are complexed.

Specifically, the functional support may be one or more selected from a) to f) below:

a) a support serving as an antioxidant;
b) a support enhancing ion transport properties and catalyst activity;
c) a support enhancing catalyst stability;
d) a support having a function of modifying hydrophilicity or hydrophobicity of the polymer electrolyte membrane;
e) a support having a function of enhancing water-holding capacity; and
f) a support having a three-dimensional mesh structure enhancing durability and long-term stability of the polymer electrolyte membrane.

In other words, the catalyst composite according to the present invention has a form in which a catalyst including a metal in the form of platinum (Pt) and Pt-M (a metal having a greater ionization tendency than platinum) is supported on the above-described functional support. Being supported on the functional support includes both being positioned on an inner surface of the functional support and being positioned on an outer surface.

The support a) is a support capable of serving as an antioxidant (radical scavenger), and specifically, the support a) may be one or more selected from $CeO_2$, $Ce_2O_3$, and $LaCeO_7$.

The support b) is a material having a chemical structure such as ABO3, AO2, ABO4, A2B2O7, and doped with an element having a different ionic radius to increase cation and anion transfer properties using oxygen vacancies and increase catalytic activity, and specifically, the support b) may be one or more selected from YSZ, SDC, LST, BYZ, BCZY, $Gd_2O_3$, $Nd_2O_3$, and $La_2Zr_2O_7$.

The support c) is a support that has excellent stability even in fuel-deficient situations, high electrochemical operation, acidic environments, and the like, and specifically, the support C) may be one or more selected from $IrO_2$, $NiO$, $SnO_2$, and $TiO_2$.

Here, the YSZ refers to yttrium-doped zirconia (or yttria-stabilized zirconia).

The SDC refers to samarium-doped ceria.

The LST (also lanthanum-doped $SrTiO_3$ or lanthanum strontium titanate) refers to $[(La_xSr_{1-x})TiO_{3-\delta}]$.

The BYZ refers to yttrium-doped barium zirconia.

The BCZY refers to yttrium-doped barium cerium zirconia.

The $CeO_2$ and $Ce_2O_3$ refer to cerium oxide, the $LaCeO_7$ refers to lanthanum cerium oxide, the $Gd_2O_3$ refers to gadolinium oxide, the $Nd_2O_3$ refers to neodymium oxide, the $La_2Zr_2O_7$ refers to lanthanum zirconium oxide, the $IrO_2$ refers to iridium oxide, the $NiO$ refers to nickel oxide, the $SnO_2$ refers to tin oxide, and the $TiO_2$ refers to titanium oxide.

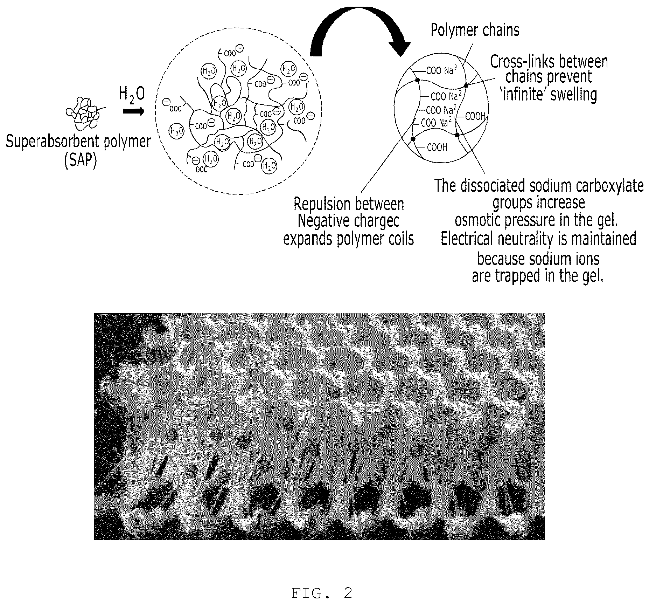

The support e) is a polymer having a network or mesh structure, which can improve water-holding capacity by trapping moisture within the polymer network, and specifically, the support e) may be a hydrogel polymer or a superabsorbent polymer (SAP). An example of the support e) having a network or mesh structure is shown at the top of FIG. 2.

The SAP may specifically be one or more selected from polyacrylate, a polyacrylamide copolymer, an ethylene maleic anhydride copolymer, cross-linked carboxymethylcellulose, a polyvinyl alcohol copolymer, cross-linked polyethylene oxide, a starch-grafted copolymer of polyacrylonitrile, and alginate.

The support f) is preferably a support with a lattice shape or a three-dimensional mesh structure, serving as a macroscopic framework within the polymer electrolyte membrane. An example of the support f) having a lattice or three-dimensional mesh structure is shown at the bottom of FIG. 2.

Meanwhile, the catalyst composite according to the present invention may satisfy a catalyst-to-functional support molar ratio of 0.3:1 to 4:1. When the amount of catalyst is less than the above-described range, the gas permeability reduction effect may be insufficient, and when the amount is more than the above-described range, it is undesirable because there is a large amount of catalyst that may not be supported on the functional support.

In addition, among the catalysts, the molar ratio of platinum to the metal having a greater ionization tendency than platinum may satisfy a range of 0.3:1 to 19:1.

Meanwhile, the particle size of such a functional support may be 1 μm or less, and more specifically, 500 nm to 50 nm. When the particle size is larger than 1 μm, the specific surface area is small, resulting in fewer reaction sites and reduced efficiency. When the particle size is 50 nm or less, the particle size becomes similar to that of the Pt and metal catalysts, so the functional support may not serve as a support for the Pt and metal catalysts.

During the manufacturing process of polymer electrolyte membranes, such as the dispersion process, a significant amount of catalysts supported by a functional support may detach. In addition, reducing the particle size of the functional support to a nano-level of 1 μm or less is preferable in that the particles can be uniformly dispersed with less energy. Therefore, the functional support is preferably ground to the nano-level of 1 μm or less as described above and then complexed with the catalyst.

FIG. 3 shows a schematic diagram for explaining the effects of grinding the functional support in the method of manufacturing the catalyst composite according to the present invention. The top shows a case where the functional support is used without grinding, illustrating significant detachment of the catalyst (Pt, Pt-M) during the manufacturing process of the polymer electrolyte membrane, such as the dispersion process, and the bottom shows a case where the functional support is used after grinding, illustrating minimized detachment of the catalyst (Pt, Pt-M) during the manufacturing process of the polymer electrolyte membrane, such as the dispersion process.

Accordingly, the method of manufacturing a catalyst composite according to the present invention is characterized in that a functional support is used after being ground. This will be explained in more detail below.

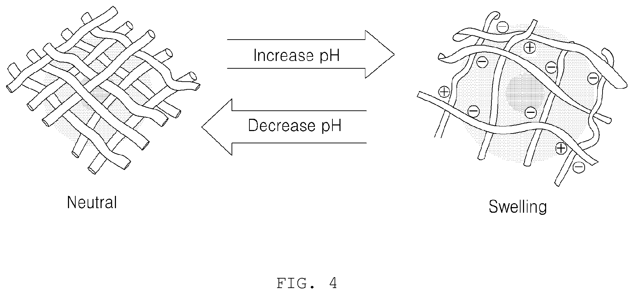

FIG. 4 shows a flowchart illustrating the method of manufacturing the catalyst composite according to one embodiment of the present invention.

As illustrated in FIG. 4, the method of manufacturing the catalyst according to the present invention includes: a step S100 of grinding a functional support to a particle size of 1 μm or less; a step S200 of mixing the ground functional support, a platinum precursor, and a metal precursor having a greater ionization tendency than platinum in a specific ratio to form a mixture; and a step S300 of reducing, drying, and heat-treating the mixture to complex the functional support with platinum and the metal having a greater ionization tendency than platinum.

In the step S200 of forming the mixture, the platinum precursor and the metal precursor having a greater ionization tendency than platinum are preferably precursors in a liquid state.

The specific reduction, drying, and heat treatment conditions of the complexing step S300 are preferably set to appropriate conditions depending on the type of functional support and the metal other than platinum used. For reference, reduction here refers to the process of reducing the platinum precursor and the metal precursor by adding a reducing agent to the mixture. Through such a reduction process, complexing of the functional support, platinum, and the metal having a greater ionization tendency than platinum is achieved.

Meanwhile, in the complexing step S300, the mixture may undergo a washing and filtering process to filter out the catalyst composite complexed through the reduction process before drying and heat treatment. In addition, the filtered catalyst composite may undergo a washing and filtering process once more after drying, and the final catalyst composite may be obtained by drying and heat-treating the filtered catalyst composite.

Meanwhile, the present invention includes an ionomer dispersion including a solid ionomer, one or more solvents, and the catalyst composite.

Here, the solid ionomer may be a fluorine-based ionomer, a hydrocarbon-based ionomer, a perfluorosulfonic acid-based ionomer, or a mixture thereof, and specifically, the solid ionomer preferably includes a perfluorosulfonic acid-based ionomer.

The solvent may be distilled water, an alcohol-based solvent, or a mixture thereof, and here, the alcohol-based solvent may be one or more of methyl alcohol, ethyl alcohol, propyl alcohol, and butyl alcohol.

The solid ionomer and the solvent may be mixed in a weight ratio of 0.1:1 to 1:1. When the solid ionomer is added in an amount less than the ratio, manufacturing a high-performance polymer electrolyte membrane is difficult, and when the solid ionomer is added in an amount more than the ratio, the solid ionomer may be added excessively, making dispersion difficult during the dispersion process.

Meanwhile, the pH of the ionomer dispersion may be controlled by adjusting the type and ratio of the solvent, and a range of 0.01 to 3.0 is preferably satisfied, and more specifically, a range of 0.8 to 2.5 is preferably satisfied. This is because polymer materials easily undergo volumetric changes due to pH (volumetric change sensitivity). More specifically, when the pH of the ionomer dispersion is greater than 3.0, swelling of the polymer materials occurs when manufacturing a polymer electrolyte membrane using the ionomer dispersion, and during the shrinkage, non-uniform phenomena such as wrinkling, breakage, and cracking of the resulting polymer electrolyte membrane occur.

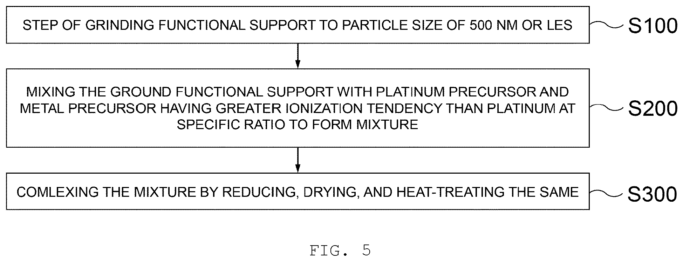

FIG. 5 shows a schematic diagram illustrating that actual polymer materials easily undergo volumetric changes due to pH, indicating that as the pH increases, swelling occurs and the volume expands (swelling), and as the pH decreases, the volume shrinks.

Meanwhile, the catalyst composite may be included in an amount of 0.05% to 5% by weight based on the total weight of the ionomer dispersion, more specifically 0.5% to 3% by weight, and even more specifically 0.5% to 2% by weight. When the catalyst composite is included in an amount less than the above-described range, the gas permeability reduction effect may be insufficient, and when the catalyst composite is included in an amount greater than the above-described range, the ion conductivity of the polymer electrolyte membrane may be reduced. Therefore, the catalyst composite is preferably included in an appropriate range that ensures the ion conductivity of the polymer electrolyte membrane while enhancing the gas permeability reduction effect.

The present invention includes a polymer electrolyte membrane including a porous support layer and an ionomer layer manufactured by impregnating and coating the porous support layer with the ionomer dispersion and then drying the same.

Meanwhile, the polymer electrolyte membrane according to one embodiment of the present invention may be in the form of a reinforced composite membrane having a three-stack structure, further including additional ionomer layers disposed on an upper portion and a lower portion of a porous support layer. In this case, the additional ionomer layer is a layer composed purely of an ionomer and may be formed simultaneously when the ionomer layer is formed by impregnating and coating the porous support layer with an ionomer dispersion.

The polymer electrolyte membrane according to the present invention has excellent long-term stability and durability, satisfying a dimensional change rate of 4% or less in the machine direction (MD) and 5% or less in the transverse direction (TD) and a thickness change rate of 45% or less. In a preferred embodiment, the MD dimensional change rate may be 3% to 4% and the TD dimensional change rate may be 3.5% to 5%.

Meanwhile, in addition to controlling the pH of the ionomer dispersion, reducing non-uniform phenomena such as wrinkling, breakage, and cracking of the manufactured polymer electrolyte membrane is possible by controlling the thickness of the polymer electrolyte membrane. As the surface non-uniformity becomes more pronounced when the polymer electrolyte membrane becomes thicker, the polymer electrolyte membrane is preferably manufactured with a structure that reduces shrinkage/expansion stress by introducing multiple thin layers. In one embodiment, a structure having five 20 $\mu$m-thick layers is preferable to a single 100 $\mu$m-thick structure for relieving stress and manufacturing a uniform polymer electrolyte membrane.

Hereinafter, specific embodiments of the present invention are described.

**Example 1: Preparation of catalyst composite**

CeO$_2$, which serves as a functional support, was ground and dispersed to a particle size of 500 nm or less. Thereafter, the nano-sized functional support was thoroughly mixed with a liquid platinum precursor (H$_2$(PtCl$_6$)) and a liquid cobalt precursor (CoCl$_2$) in a ratio of 4:1 (molar ratio). Thereafter, a reducing agent was added to reduce the precursors, thereby producing a catalyst composite in which the functional support, platinum, and cobalt were complexed. The prepared catalyst composite was then washed and filtered. Then, heat treatment was performed at 130 °C for three hours and drying was performed at 80 °C, finally preparing the catalyst composite in which the functional support and platinum and/or platinum-cobalt were integrated.

## Comparative Example 1: Preparation of catalyst composite (functional support not ground)

The catalyst composite was prepared in the same manner as in Example 1, but using the $CeO_2$ serving as the functional support as is without grinding. For reference, the particle size of the unground $CeO_2$ was 20 $\mu$m.

## Manufacturing Examples 1 to 4: Manufacture of polymer electrolyte membranes

A solid perfluorosulfonic acid-based ionomer having $SO_3$ groups (3M, product name EW725) was added and mixed in a solvent mixture of distilled water and ethyl alcohol at an ionomer-solvent weight ratio of 1:1. Thereafter, the catalyst composite of Example 1 was added and mixed in varying amounts according to each manufacturing example. The resulting mixture was then placed in a paste mixer, which was operated at 2,000 rpm for 30 minutes to disperse the mixture, thereby preparing an ionomer dispersion. The specific amounts of the catalyst composite are shown in Table 1 below.

[Table 1]

| Polymer electrolyte membrane | Amount of catalyst composite in ionomer dispersion [% by weight] |
| --- | --- |
| Manufacturing Example 1 | 0.5 |
| Manufacturing Example 2 | 1 |
| Manufacturing Example 3 | 3 |
| Manufacturing Example 4 | 5 |

Polymer electrolyte membranes were manufactured using the ionomer dispersions prepared in this manner. The manufacturing method was identical for all the membranes. Specifically, first application of the ionomer dispersion was performed to a polymer film (polyethylene terephthalate (PET)), and then the ionomer dispersion was applied to a uniform thickness using a thickness-adjustable applicator. Thereafter, a porous support, polytetrafluoroethylene (PTFE), was impregnated with the ionomer dispersion that underwent the first application, and second application of the ionomer dispersion was performed thereon. After performing first drying at 40 °C and second drying at 80 °C, heat treatment was sequentially performed in the range of 120 to 200 °C to obtain the final polymer electrolyte membrane.

## Experimental Example 1: Ionic conductivity according to the content of catalyst composite

The ionic conductivity of each of the polymer electrolyte membranes of Manufacturing Examples 1 to 4 was measured under relative humidity (RH) 100% conditions. The measurement results are shown in Table 2 below.

[Table 2]

| Polymer electrolyte membrane | Content of catalyst composite in ionomer dispersion [% by weight] | Ionic conductivity [S/cm] |
| --- | --- | --- |
| Manufacturing Example 1 | 0.5 | 0.133 |
| Manufacturing Example 2 | 1 | 0.121 |
| Manufacturing Example 3 | 3 | 0.106 |
| Manufacturing Example 4 | 5 | 0.088 |

As shown in Table 2 above, it was observed that the ionic conductivity of the polymer electrolyte membrane decreased as the content of the catalyst composite increased. Therefore, while the catalyst composite is applied to the polymer electrolyte membrane for a gas permeability reduction effect, controlling the amount is important so that the ionic conductivity of the polymer electrolyte membrane does not become too low. The catalyst composite may be included in an amount of 0.05% to 5% by weight based on the total weight of the ionomer dispersion, most preferably 0.5% to 3% by weight, and even more preferably 0.5% to 2% by weight. When the amount is less than this, the gas permeability reduction effect may be insufficient, and when the amount is more than this, the ionic conductivity of the polymer electrolyte membrane becomes too low.

**Experimental Example 2: Platinum content reduction rate**

The platinum content in the catalyst composite of Comparative Example 1, the catalyst composite of Example 1, the polymer electrolyte membranes manufactured using the catalyst composite of Comparative Example 1, and the polymer electrolyte membrane manufactured using the catalyst composite of Example 1 was measured through inductively coupled plasma spectrometry (ICP) analysis, and the reduction rate (%) of the platinum content was calculated using the measured values. The results are shown in Table 3 below. For reference, the method of manufacturing the polymer electrolyte membrane was the same as in Manufacturing Example 1.

[Table 3]

| Catalyst composite used | Platinum content reduction rate [%] = [(Platinum content in catalyst composite - Platinum content in polymer electrolyte membrane)/ Platinum content in catalyst composite] X 100 |
|---|---|
| Comparative Example 1 | 37.3 |
| Example 1 | 4.5 |

As shown in Table 3 above, when the catalyst composite of Comparative Example 1 was used, it was observed that the platinum content decreased by 37.3% after the manufacture of the polymer electrolyte membrane. On the other hand, when the catalyst composite of Example 1 of the present invention was used, the platinum content decreased by 4.5% after the manufacture of the polymer electrolyte membrane, confirming that a much smaller amount of platinum was lost compared to Comparative Example 1. In other words, it was confirmed that when the functional support is ground to a nano-level of 1 $\mu$m or less and used, the loss of the catalyst is minimized during the process of manufacturing the polymer electrolyte membrane, such as the dispersion process.

**Manufacturing Examples 5 to 8: Manufacture of polymer electrolyte membranes (pH adjustment)**

Polymer electrolyte membranes were manufactured in the same manner as Manufacturing Examples 1 to 4, but unlike Manufacturing Examples 1 to 4 where the pH of the ionomer dispersion was not specifically adjusted, the pH of the ionomer dispersion was adjusted to manufacture the polymer electrolyte membranes in Manufacturing Examples 8 to 8. The pH was adjusted by controlling the ratio of water and ethyl alcohol, which served as the solvents, specifically as shown in Table 4 below.

In Table 4 below, the pH of the ionomer dispersion is the values measured without specifically adjusting the pH in Manufacturing Examples 1 to 4 and the values measured after adjusting the pH in Manufacturing Examples 5 to 8.

[Table 4]

| Polymer electrolyte membrane | Content of catalyst composite in ionomer dispersion [% by weight] | pH of ionomer dispersion |
|---|---|---|
| Manufacturing Example 1 | 0.5 | 0.9 |
| Manufacturing Example 2 | 1 | 1.6 |
| Manufacturing Example 3 | 3 | 3.2 |
| Manufacturing Example 4 | 5 | 3.7 |
| Manufacturing Example 5 | 0.5 | 1.0 |
| Manufacturing Example 6 | 1 | 1.3 |
| Manufacturing Example 7 | 3 | 1.2 |
| Manufacturing Example 8 | 5 | 1.6 |

**Experimental Example 3: Dimensional change rate, thickness change rate, and surface conditions of polymer electrolyte membranes**

To measure the dimensional change rate, thickness change rate, and surface conditions of the polymer electrolyte membranes of Manufacturing Examples 1 to 8, each membrane was cut to a size of 5 cm x 5 cm and allowed to stand at room temperature and in hot water for at least 12 hours. Thereafter, the MD length, TD length, and thickness were measured before and after the time when the membrane was allowed to stand, in order to calculate the change rate, and the surface condition was observed visually. Here, the thickness was measured at five points, and the changes in MD and TD lengths after swelling were measured. The measurement results are shown in Table 5 below.

For reference, a large dimensional change rate and a thickness change rate of the polymer electrolyte membrane indicate a significant change in conditions after the time when the membrane was allowed to stand and may correspond to a polymer electrolyte membrane that is undesirable in terms of long-term stability and durability.

[Table 5]

| Polymer electrolyte membrane | Content of catalyst composite [% by weight] | pH of ionomer dispersion | Dimensional change rate | | Thickness change rate [%] | Surface conditions |
|---|---|---|---|---|---|---|
| | | | MD [%] | TD [%] | | |
| Manufacturing Example 1 | 0.5 | 0.9 | 3 | 3.5 | 36 | Good |
| Manufacturing Example 2 | 1 | 1.6 | 3.5 | 4.5 | 41 | Good |
| Manufacturing Example 3 | 3 | 3.2 | 4.5 | 5.5 | 49 | Non-uniform |
| Manufacturing Example 4 | 5 | 3.7 | 5.5 | 7 | 62 | Cracked |
| Manufacturing Example 5 | 0.5 | 1.0 | 3.5 | 3.5 | 36 | Good |
| Manufacturing Example 6 | 1 | 1.3 | 3.5 | 4 | 40 | Good |
| Manufacturing Example 7 | 3 | 1.2 | 3.5 | 4 | 42 | Good |
| Manufacturing Example 8 | 5 | 1.6 | 4 | 4.5 | 45 | Good |

As shown in Table 5 above, the polymer electrolyte membranes (Manufacturing Examples 1, 2, and 4 to 8) manufactured using an ionomer dispersion satisfying a pH of 3.0 or lower satisfied a dimensional change rate with 4% or less in MD and 5% or less in TD. On the other hand, the polymer electrolyte membranes (Manufacturing Examples 3 and 4) manufactured using an ionomer dispersion with a pH exceeding 3.0 exhibited an MD dimensional change rate of 4.5% or more and a TD dimensional change rate of 5.5% or more.

Regarding the thickness change rate, the polymer electrolyte membranes (Manufacturing Examples 1, 2, and 4 to 8) manufactured using an ionomer dispersion satisfying a pH of 3.0 or lower satisfied a value of 45% or less. On the other hand, the polymer electrolyte membranes (Manufacturing Examples 3 and 4) manufactured using an ionomer dispersion with a pH exceeding 3.0 exhibited a value of 49% or higher.

Furthermore, it was confirmed that non-uniformity and cracking phenomena occurred on the surface of polymer electrolyte membranes (Manufacturing Example 3 and 4) manufactured using an ionomer dispersion with a pH exceeding 3.0.

## Manufacturing Example 9: Manufacturing of polymer electrolyte membrane (without using catalyst composite)

A polymer electrolyte membrane was manufactured in the same manner as Manufacturing Example 1, except that no catalyst composite was used.

## Experimental Example 4: Hydrogen permeability with and without catalyst composite

In order to measure the hydrogen permeability of the polymer electrolyte membranes of Manufacturing Examples 1 and 9, each membrane was fixed to a jig with an area of 5 cm x 5 cm. Thereafter, a system was constructed to supply hydrogen gas to one side and nitrogen gas to the opposite side under conditions of RH 50% and 70 °C. A hydrogen gas detector was installed at an gas outlet on the nitrogen gas supply side, and the percent by volume of the hydrogen gas permeated through the electrolyte membrane to the nitrogen gas supply side was measured over time. The measurement results are shown in Table 6 below.

[Table 6]

| Operation time [h] | H$_2$ gas in Manufacturing Example 9 [% by volume] | H$_2$ gas in Manufacturing Example 1 [% by volume] |
|---|---|---|
| Initial | 0.10 | 0.15 |
| 50 | 0.22 | 0.15 |
| 100 | 0.51 | 0.15 |
| 150 | 0.66 | 0.17 |
| 200 | 0.81 | 0.19 |

As shown in Table 6 above, in the polymer electrolyte membrane of Manufacturing Example 9, which did not include a catalyst composite, the hydrogen gas permeability increased over time. On the other hand, in the polymer electrolyte membrane of Manufacturing Example 1, which included the catalyst composite of the present invention, the hydrogen gas permeability remained low even after time, confirming that a gas permeability reduction effect is exhibited.

**Manufacturing Examples 10 to 12: Manufacture of polymer electrolyte membranes (change in functional support)**

Polymer electrolyte membranes were manufactured using catalyst composites manufactured in the same manner as Manufacturing Example 1, except that different types of functional supports were used, specifically, as shown in Table 7 below. For reference, the method of manufacturing the catalyst composites was the same as in Example 1, except for the type of functional support.

[Table 7]

| Polymer electrolyte membrane | Catalyst | Function support |
|---|---|---|
| Manufacturing Example 1 | Pt-Co | CeO$_2$ |
| Manufacturing Example 10 | Pt-Co | IrO$_2$ |
| Manufacturing Example 11 | Pt-Co | NiO |
| Manufacturing Example 12 | Pt-Co | TiO$_2$ |

**Experimental Example 5: Hydrogen permeability of catalyst composites according to the type of functional Support**

Hydrogen permeability was measured for the polymer electrolyte membranes of Manufacturing Example 1 and Manufacturing Examples 9 to 12. The measurement method was the same as in Experimental Example 4, but the hydrogen gas was measured at an operating time of 200 h. The measurement results are shown in Table 8 below.

[Table 8]

| Polymer electrolyte membrane | Catalyst | Functional support | H$_2$ gas in N$_2$ [% by volume] |
|---|---|---|---|
| Manufacturing Example 9 | X | X | 0.81 |
| Manufacturing Example 1 | Pt-Co | CeO2 | 0.19 |
| Manufacturing Example 10 | Pt-Co | IrO2 | 0.21 |
| Manufacturing Example 11 | Pt-Co | NiO | 0.27 |
| Manufacturing Example 12 | Pt-Co | TiO2 | 0.23 |

As shown in Table 8 above, compared to the polymer electrolyte membrane of Manufacturing Example 9, which did not include the catalyst composite, the polymer electrolyte membranes of Manufacturing Examples 10 to 13, which included the catalyst composite of the present invention, showed a lower hydrogen gas permeability, thus confirming that a gas permeability reduction effect is exhibited.

Next, an electrolyte membrane structure (2) in which the concentration gradients of the hydrogen gas reduction additive and the antioxidant are independently controlled for a polymer electrolyte membrane-based water electrolysis (PEMWE) system, that is, a polymer electrolyte membrane (PEM)-based water electrolysis (WE) system, is described.

**<(2) Electrolyte membrane structure in which the concentration gradients of hydrogen gas reduction additive and antioxidant are independently controlled>**

An electrolyte membrane in which the concentration gradients of the hydrogen gas reduction additive and the antioxidant are independently controlled according to a preferred embodiment of the present invention is an invention relating to an electrolyte membrane that ensures safety and durability by effectively blocking hydrogen gas.

The electrolyte membrane is a reinforced composite electrolyte membrane for water electrolysis, including a first ionomer layer disposed on an anode side, a second ionomer layer disposed on a cathode side, and a composite layer in which a porous substrate interposed between the first ionomer layer and the second ionomer layer is at least partially impregnated with one or more of the first ionomer and the second ionomer, wherein a functional additive for reducing hydrogen gas and preventing oxidation is introduced not only in the ionomer layer (electrolyte layer) but also in the composite layer (reinforcement layer).

Thus, while functional additives are introduced into all layers, since the dominant reactions differ between the electrolyte membrane on the anode side and the electrolyte membrane on the cathode side in a water electrolysis cell, the concentration gradients of the additives for hydrogen gas reduction (capture) and oxidation prevention must be set independently. In other words, the present invention relates to an electrolyte membrane with a concentration gradient designed to enable the functional additives to operate most efficiently.

Referring to FIG. 6, position ① corresponds to a position where the hydrogen gas crossing over from the cathode and the oxygen gas (abundant) from the anode may easily be converted into water ($H_2O$). Specifically, this is a position where the role of platinum (Pt) emerges, and a reaction to convert hydrogen and oxygen gases into water occurs according to a surface adsorbed mechanism.

Meanwhile, position ② is a position where membrane degradation occurs due to active radical formation resulting from $H_2O_2$ generation caused by oxygen gas crossing over from the anode. Therefore, this is a position where formation of higher concentrations is preferable when creating an antioxidant gradient.

The crossover of hydrogen and oxygen gases is a phenomenon in which hydrogen and oxygen gases permeate through diffusion when hydrogen is generated on the cathode side and oxygen is generated on the anode side and thus a concentration gradient of each of the gas is formed. When pressurizing the cathode side, permeation to the anode side is promoted (30 to 40 bar), and when differential pressure is applied to reduce system costs, the crossover becomes even more severe.

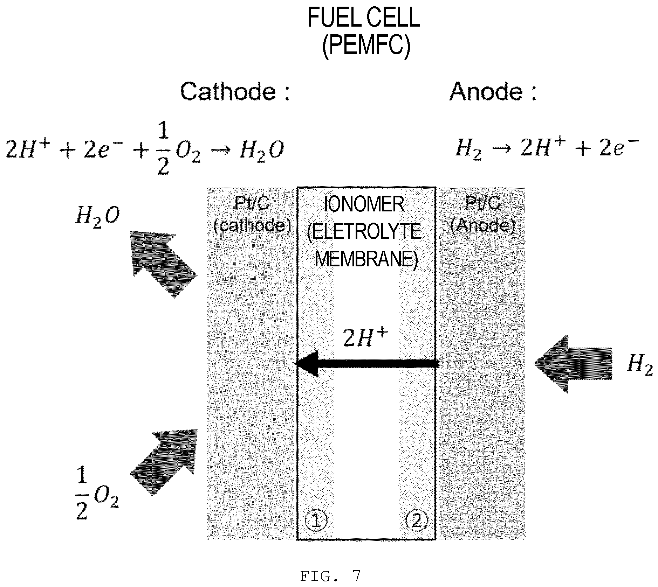

Both fuel cells (PEMFC) and water electrolysis (PEMWE) devices are energy devices based on polymer electrolyte membranes, but they differ in terms of degradation and crossover. FIG. 6 shows a schematic diagram illustrating a water electrolysis system, and FIG. 7 shows a schematic diagram illustrating a fuel cell system.

In the case of fuel cell systems, the most significant degradation factor is degradation caused by radicals generated by oxygen species, and antioxidants are added to control this radical degradation. The primary site of degradation is position ① (FIG. 7) on the electrolyte membrane near the cathode. Therefore, the region where the antioxidant must be positioned at a high concentration is also position ①, which is the ionomer layer on the cathode side.

From the perspective of gas permeability, hydrogen gas permeates and forms radicals when oxygen meets the metal, and therefore, hydrogen permeability is prevented. In most fuel cell systems, platinum (Pt) additives are introduced to block permeating hydrogen and suppress radical formation.

In contrast, in the case of a water electrolysis system, hydrogen gas permeates from a cathode to an anode in a pressurized atmosphere of 30 bar or higher. When the amount of hydrogen gas crossing over into the oxygen atmosphere towards an anode exceeds 4%, the risk of explosion increases due to the mixing of oxygen and hydrogen. To prevent explosions, efforts are being made to prevent hydrogen gas crossover by methods such as adding, to the electrolyte membrane, additives that block hydrogen gas permeation.

Unlike fuel cell systems, the primary site of degradation is also position ① (FIG. 6), where both hydrogen and oxygen are present, that is, the electrolyte membrane region near the anode. Unlike fuel cells, degradation caused by radicals has only a minor impact during water electrolysis operation, and the degradation caused by radicals occurs in small amounts in the anode direction. However, the electrolyte membrane region near the cathode, i.e., position ② (FIG. 6), is where hydrogen peroxide is generated, and thus radical degradation occurs relatively more frequently.

Therefore, in the present invention, in order to maximize the management of degradation and explosion risks in such water electrolysis systems, the hydrogen gas reduction additive is mainly positioned in the anode direction to prevent hydrogen from mixing with oxygen above a certain concentration, whereas conversely, the antioxidant is mainly positioned in the cathode direction to achieve effective radical removal.

In the present invention, a reinforced composite electrolyte membrane structure including first and second ionomer layers and a composite layer is implemented such that a hydrogen gas reduction additive and an antioxidant have different (opposite) concentration gradients.

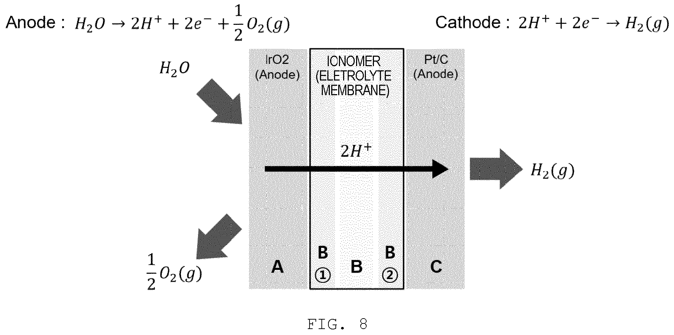

FIG. 8 shows a schematic diagram illustrating a reinforced composite electrolyte membrane structure according to one embodiment of the present invention, wherein the first ionomer layer on the anode side is labeled B-1, the intermediate composite layer is labeled B, and the second ionomer layer on the cathode side is labeled B-2.

In the case of the hydrogen gas reduction additive, since the region closer to the anode side must have a high concentration gradient, the hydrogen gas reduction additive may be contained such that B-1 > B > 0 is satisfied when the concentration of the first ionomer layer denoted as B-1 and the concentration of the composite layer is denoted as B. On the other hand, in the case of the antioxidant, conversely, since the region closer to the cathode side must have a high concentration gradient, the antioxidant may be contained such that B-2 > B > 0 is satisfied when the concentration of the second ionomer layer is denoted as B-2 and the concentration of the composite layer is denoted as B.

As mentioned earlier, in order to reduce hydrogen gas permeation and suppress degradation, the concentration (B-1) of the hydrogen gas reduction additive in the first ionomer layer, which is a region closer to the anode, must be higher than the concentration (B) in the composite layer. In the case of the composite layer formed of a porous substrate within the reinforced composite electrolyte membrane structure, since the composite layer is a region where hydrogen and oxygen gases remain for a relatively long time during the movement process, a certain level of hydrogen gas reduction additive must also be present within the composite layer (B>0).

Meanwhile, there are cases where a hydrogen gas reduction additive and an antioxidant are introduced into all three layers of the structure. In the case of the hydrogen gas reduction additive, when the concentration of the first ionomer layer is denoted as B-1, the concentration in the second ionomer layer is denoted as B-2, and the concentration in the composite layer is denoted as B, the hydrogen gas reduction additive may be contained such that B-1 $\geq$ B-2 > B > 0 is satisfied. In the case of the antioxidant, when the concentration in the first ionomer layer is denoted as B-1, the concentration in the second ionomer layer is denoted as B-2, and the concentration in the composite layer is denoted as B, the antioxidant may be contained such that B-2 $\geq$ B-1 > B > 0 is satisfied.

According to one embodiment of the present invention, the hydrogen gas reduction additive may be a Pt/ceria catalyst composite, that is, a platinum catalyst supported on cerium oxide, and the antioxidant may be ceria (cerium oxide) as a cerium (Ce)-based radical scavenger.

When Pt/ceria, as a hydrogen gas reduction additive, is mainly introduced on the anode side, it is advantageous in that an oxygen generation reaction occurs at the anode and thus the oxygen concentration on the anode side is high, and therefore, the hydrogen gas on the opposite side crosses over, resulting in many sites where the additive (Pt/ceria) reacts with oxygen/hydrogen, thereby increasing the reaction rate ($H_2(g)$ + 1/2 $O_2(g)$ -> $H_2O(g)$). Furthermore, since the hydrogen gas migration speed is about two-fold that of oxygen, the probability or frequency of the above reaction occurring on the anode side is high. In addition, because platinum (Pt) can serve, to some extent, as a catalyst for the oxygen generation reaction by assisting the anode electrode material ($IrO_2$, etc.) that performs the oxygen generation reaction, the polarization resistance of the cell is lowered, contributing to performance improvement.

In particular, regarding cell performance, it was confirmed that although the hydrogen ion conductivity of the Pt/Ceria-introduced electrolyte membrane in the planar direction was actually low, performance was maintained at an equivalent or higher level in the environment where electrochemical reactions of water electrolysis occur after cell assembly.

Meanwhile, when ceria, as an antioxidant, is primarily introduced to the cathode side, it is possible to drastically reduce hydrogen gas permeation ($H_2$ in $O_2$), while simultaneously maintain performance by the introduction of Pt/ceria, thereby maximizing selectivity, one of the key parameters.

In the present invention, selectivity (S) refers to the selective mass transfer performance of the electrolyte membrane based on ion conductivity ($\sigma$), which is a measure of ion migration through the membrane, and hydrogen gas permeability (P) through the electrolyte membrane. In this case, since the electrolyte membrane must effectively transport ions while suppressing hydrogen gas permeation, selectivity is expressed by the following formula.

$$S = \frac{\sigma}{P}$$ (Unit: mS cm$^{-1}$ Barrer$^{-1}$)

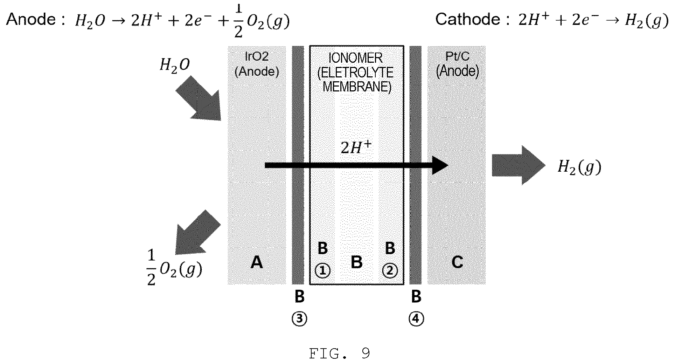

Referring to FIG. 9, the electrolyte membrane of the present invention may further include a third ionomer layer (B-3 in FIG. 9) formed on an outer surface of the first ionomer layer to be interposed between the anode and the first ionomer layer. In this case, the hydrogen gas reduction additive may be contained such that B-3 $\geq$ B-1 > B > 0 is satisfied, when B-1 is the concentration in the first ionomer layer, B-3 is the concentration in the third ionomer layer, and B is the concentration in the composite layer.

Since the third ionomer layer, which is in contact with the anode, is the position with the highest oxygen concentration, the layer has the largest number of reaction sites where oxygen, hydrogen, and the hydrogen gas reduction additive meet. Therefore, it is advantageous for the third ionomer layer (B-3) to have a high concentration of the hydrogen gas reduction additive compared to the concentration (B-1) of the first ionomer layer. In addition, it was also considered that although the oxygen concentration is high, the anode supplies water as fuel, making it a moist environment where hydrogen peroxide and radicals are difficult to generate.

In addition, the electrolyte membrane of the present invention may further include a fourth ionomer layer (B-4 in FIG. 9) formed on an outer surface of the second ionomer layer to be interposed between the cathode and the second ionomer layer. In this case, the antioxidant may be contained such that B-2 ≥ B-4 > B > 0 is satisfied, when B-2 is the concentration in the second ionomer layer, B-4 is the concentration in the fourth ionomer layer, and B is the concentration in the composite layer.

Since the cathode direction is an environment where hydrogen peroxide is readily generated due to a low humidity atmosphere and oxygen gas crossover, and radical generation occurs actively, the fourth ionomer layer, like the second ionomer layer, must also contain a high antioxidant concentration (B-4 > B) compared to the composite layer. In addition, the second ionomer layer is the position where the concentration of oxygen gas permeating from the anode side toward the cathode direction is highest, and the oxygen gas concentration actually decreases toward the fourth ionomer layer. Therefore, it is advantageous for the second ionomer layer to have a higher antioxidant content compared to the fourth ionomer layer (B-2 ≥ B-4).

In addition, the present invention may envisage an embodiment in which both the third and fourth ionomer layers are applied. In this case, the hydrogen gas reduction additive may be contained such that B-3 ≥ B-1 ≥ B-2 ≥ B-4 ≥ B > 0 is satisfied, when B-1 is the concentration in the first ionomer layer, B-2 is the concentration in the second ionomer layer, B-3 is the concentration in the third ionomer layer, B-4 is the concentration in the fourth ionomer layer, and B is the concentration in the composite layer.

Likewise, the antioxidant may be contained such that B-2 ≥ B-4 ≥ B-3 ≥ B-1 ≥ B-1 ≥ B-4 ≥ B-4 ≥ B-1 ≥ B > 0 is satisfied, when B-1 is the concentration in the first ionomer layer, B-2 is the concentration in the second ionomer layer, B-3 is the concentration in the third ionomer layer, B-4 is the concentration in the fourth ionomer layer, and B is the concentration in the complex layer.

Meanwhile, the composite layer of the electrolyte membrane of the present invention may be composed of at least two stacked porous substrates interposed between the first and second ionomer layers. The outermost layer of each stacked porous substrate comes into contact with the ionomer layers on both sides, and the composite layer may be formed by at least partially impregnating the composition constituting the contacted ionomer layers.

In the case of a so-called multi-layer structure using two or more porous substrates, multiple thin ionomer layers may be stacked, which has the advantage of not having a high expansion and shrinkage rate of the electrolyte membrane. Furthermore, since two or more porous substrates, which play the most significant role in mechanical strength, are introduced, an increase in basic strength is accompanied. Furthermore, during the roll-to-roll (RTR) membrane formation process, it is possible to apply a thin layer and dry it, which maximizes the drying effect and facilitates the removal of impurities such as residual solvents.

The porous substrate may include at least one fluorinated polymer, and the fluorinated polymer may preferably be polytetrafluoroethylene (PTFE), poly(ethylene-co-tetrafluoroethylene) (EPTFE), expanded polytetrafluoroethylene (e-PTFE), polyvinylidene fluoride (PVDF), expanded polyvinylidene fluoride (e-PVDF), expanded poly(ethylene-co-tetrafluoroethylene) (eEPTFE), or a mixture thereof, and more preferably, expanded poly(ethylene-co-tetrafluoroethylene) (eEPTFE.

When the substrate is formed in the form of two or more layers of porous substrates, the stacked porous substrates may have a continuous stacked structure in which the porous substrates are in direct contact, but at least two layers of porous substrates may be spaced apart by a predetermined distance to provide an internal space, and an ionomer inner layer formed of an ionomer composition may be interposed therein. In this case, the ionomer inner layer may be composed of the same components as the ionomer layer on the anode or cathode side, that is, one or more of the first and second ionomer layers.

A reinforced composite electrolyte membrane for water electrolysis according to the present invention may be manufactured by a method including:

    1) a step of preparing a first ionomer dispersion including a first ionomer, a solvent, and an additive, and a second ionomer dispersion including a second ionomer, a solution, and an additive;
    2) a step of applying the first ionomer dispersion to a base, such as a carrier film;
    3) a step of stacking a porous substrate onto the surface onto which the first ionomer dispersion is applied, to perform complexing by ionomer impregnation;
    4) a step of applying the second ionomer dispersion to the other surface of the porous substrate, which is the surface opposite to the surface in contact with the first ionomer dispersion; and
    5) a step of drying and heat-treating the manufactured electrolyte membrane.

In this case, the drying and heat-treating step may be carried out between other steps.

By controlling the type and amount of additives in the first ionomer dispersion and the second ionomer dispersion, concentration gradients of the two types of additives (hydrogen gas reduction additive and antioxidant) between the first ionomer layer, the composite layer, and the second ionomer layer may be independently implemented.

When forming additional layers such as the third and fourth ionomer layers, an additional layering process may be performed by making Steps 2) to 5) into a single cycle.

Next, the electrolyte membrane structure and process (3) in which layer design and additive distribution are controlled through the control of the pore size of a reinforced substrate and the particle size of additives, applied to a PEMWE, that is, a PEM-based WE system, will be described.

**<(3) Electrolyte membrane structure and process in which layer design and additive distribution are controlled through the control of the pore size of a reinforced substrate and the particle size of additives>**

In the reinforced composite electrolyte membrane according to the present invention in which a porous substrate and an ionomer layer are complexed, by controlling the particle size (diameter) of the hydrogen gas reduction additive contained in the ionomer layer and the pore size (average/maximum) of the porous substrate, the additives can be positioned differently within the electrolyte membrane according to particle size, and an intermediate layer in which large particle size additives are densely packed can be formed without a separate process.

Capillary action refers to the phenomenon that when a capillary tube is placed in a liquid, the liquid filling a thin tube rises or falls due to intermolecular forces and mutual attractive forces acting between molecules and the wall of the thin tube.

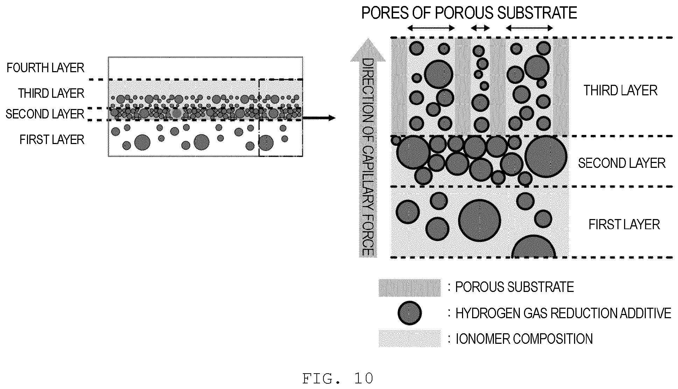

FIG. 10 shows a schematic diagram illustrating a cross-sectional structure of an electrolyte membrane according to one embodiment of the present invention and the behavior of a hydrogen gas reduction additive according to the particle size during a composite layer formation process.

The hydrogen gas reduction additive contained in the first ionomer composition may be classified into a first additive having a particle size smaller than the maximum pore size of the porous substrate and a second additive having a particle size larger than the maximum pore size of the porous substrate. Referring to FIG. 10, during the complexing process between the ionomer layer and the porous substrate, that is, the process of forming the complex layer, the ionomer composition is impregnated into the pores of the porous substrate by capillary force. At this time, particles smaller than the pore size of the porous substrate enter the pores, whereas conversely, particles larger than the pore size accumulate at the interface between the ionomer layer and the complex layer (Layer 2 in FIG. 10), thereby forming a separate layer in which large particles are densely packed at a high concentration.

Through this process, the first additive, which is smaller than the maximum pore size of the porous substrate, is impregnated into the pores of the porous substrate and is positioned within the complex layer (Layer 3 in FIG. 10), whereas the second additive, which is larger than the maximum pore size of the porous substrate, remains in the first ionomer layer. More specifically, an intermediate layer (Layer 2 of FIG. 10) in which the second additive is densely concentrated at a higher concentration than the first additive is formed due to capillary force, and in the first ionomer layer (Layer 1 of FIG. 10) excluding the intermediate layer, particles of large and small particle sizes, that is, the first additive and the second additive, are present together.

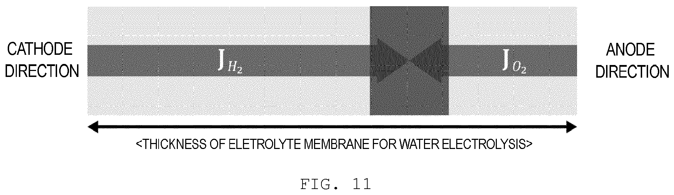

The hydrogen gas reduction additive induces a reaction that converts hydrogen gas and oxygen gas into water within the electrolyte membrane, and therefore, the hydrogen gas reduction effect can be maximized when the additive is positioned near the point where the hydrogen gas and oxygen gas meet. Under conditions of the same thickness and concentration and steady state, the flux of the reactants may be calculated using the following formula. Referring to FIG. 11, because the flux of oxygen gas is slower than that of hydrogen gas due to differences in diffusion coefficient and molecular weight, oxygen gas and hydrogen gas meet at a position closer to the anode within the electrolyte membrane. Therefore, the reaction is efficient when the additive is densely packed at that position (shaded area in FIG. 11), which corresponds to the intermediate layer region according to the present invention.

$$J_{Diff} = -D^{eff} \frac{c^*_R - c^0_R}{\delta}$$

Where,

c*_R: the catalyst layer reactant concentration
c0_R: the bulk (flow channel) reactant concentration
$\delta$: the electrode (diffusion layer) thickness
D^{eff}: the effective reactant diffusivity

As mentioned above, in order to form an intermediate layer region, relative control between the pore size of the porous substrate and the particle size (particle diameter) of the hydrogen gas reduction additive is required. The pore size of the porous substrate may be controlled through the composition of the precursor material or process conditions during the manufacturing process of a substrate such as e-PTFE, and the particle size of the additives may be controlled through a combination of conditions such as bead size, flow rate, milling time, and the initial particle size of the additives during the manufacturing process via ball milling, but the method is not limited to the above-described methods.

When the distribution of size-controlled hydrogen gas reduction additive particles is analyzed from the smallest to the largest particle, the distribution typically exhibits a curve similar to a normal distribution. In this case, the particle size of the additives corresponding to the percentage greater than 0% and less than or equal to X% in the particle size distribution- where the percentage (%) represents the proportion of the number of particles having that particle size to the total number of particles-is preferably below the maximum pore size of the porous substrate, and the reference value X may be 50 to 80. In other words, the proportion of the first additive to the total number of particles of the hydrogen gas reduction additive may be 50% to 80%, and at the same time, the proportion of the second additive may be 20% to 50%.

In other words, additives smaller than the maximum pore size of the porous substrate are impregnated into the porous substrate by capillary force to form a composite layer, and particles corresponding to 50% to 80% of the total number of additive particles in terms of particle size distribution correspond to this, while the remaining additive particles with relatively larger particle sizes are unable to enter the pores of the porous substrate and are densely packed at the interface between the ionomer layer and the composite layer to form an intermediate layer or remain on the ionomer layer in a bulk state.

Additives introduced into the porous substrate are positioned within the composite layer of the electrolyte membrane. Since the composite layer, which is composed of a porous substrate within the reinforced composite electrolyte membrane structure, is a region where hydrogen and oxygen gases remain for a relatively long time during the movement process, a certain level of hydrogen gas reduction additive must be present within the composite layer. Therefore, the additives need to be controlled so that additives with sizes in the upper 50% to 80% of the particle size distribution are positioned in large quantities within the composite layer, and in this case, the effect of expanding the range of the intermediate layer due to the increase in capillary force can also be obtained.

On the other hand, when additives (second additives) with particle sizes larger than the maximum pore size of the porous substrate, exceeding 50% of the particle size distribution, are distributed in large quantities, the excess additive particles may not be impregnated into the porous substrate. Consequently, the ionomer composition is hindered from entering the pores of the porous substrate by the large additive particles, which slows down the overall impregnation speed and weakens the capillary force, raising concerns that the range of the intermediate layer may be reduced. On the other hand, when the proportion of the second additive is less than 20%, there is a problem in that the amount of the additive itself to form the intermediate layer is insufficient, making it impossible to implement an intermediate layer of sufficient thickness.

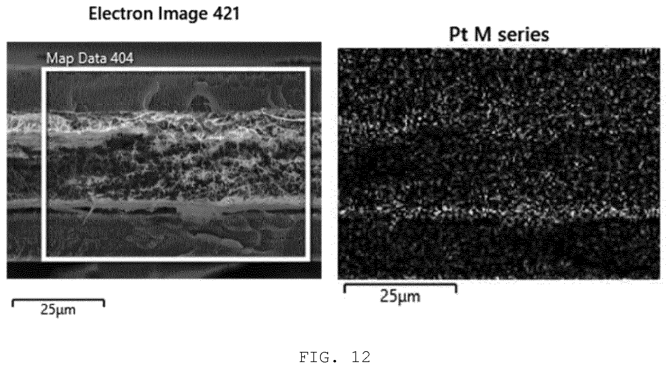

FIG. 12 is a cross-sectional photograph showing an electrolyte membrane according to a preferred embodiment of the present invention (left) and an energy dispersive spectroscopy (EDS) component analysis image of platinum (Pt) in a square area thereof (right). Referring to the EDS component analysis image on the right in FIG. 12, it can be confirmed that a layer where the platinum (Pt) element is densely packed is formed near the interface between the first ionomer layer (lower approximately 1/4 area) and the composite layer (lower approximately 1/4 to 2/3 area), which corresponds to the 'intermediate layer' of the present invention.

Meanwhile, the present invention is also applicable to a three-layer structure further including, in addition to the first ionomer layer-composite layer structure, a second ionomer layer composed of a second ionomer composition on the other surface of the porous substrate of the composite layer, which is the surface opposite to the surface where the first ionomer layer is formed. In this case, only the first ionomer composition may be impregnated into the porous substrate to form a composite layer, and a second ionomer layer may be separately stacked, or alternatively, the second ionomer composition forming the second ionomer layer may also be impregnated into the porous substrate at least partially to form a composite layer containing both the first and second ionomer compositions.

Meanwhile, the composite layer of the electrolyte membrane of the present invention may be composed of at least two stacked porous substrates interposed between the first and second ionomer layers. The outermost layer of each stacked porous substrate comes into contact with the ionomer layers on both sides, and the composite layer may be formed by at least partially impregnating the composition constituting the contacted ionomer layers.

The porous substrate may include at least one fluorinated polymer, and the fluorinated polymer may preferably be polytetrafluoroethylene (PTFE), poly(ethylene-co-tetrafluoroethylene) (EPTFE), expanded polytetrafluoroethylene (e-PTFE), polyvinylidene fluoride (PVDF), expanded polyvinylidene fluoride (e-PVDF), expanded poly(ethylene-co-tetrafluoroethylene) (eEPTFE), or a mixture thereof, and more preferably, expanded poly(ethylene-co-tetrafluoroethylene) (eEPTFE.

When the substrate is formed in the form of two or more layers of porous substrates, the stacked porous substrates may have a continuous stacked structure in which the porous substrates are in direct contact, but at least two layers of porous substrates may be spaced apart by a predetermined distance to provide an internal space, and an ionomer inner layer formed of an ionomer composition may be interposed therein. In this case, the ionomer inner layer may be composed of the same components as the ionomer layer on the anode or cathode side, that is, one or more of the first and second ionomer layers.

Meanwhile, the present invention provides a method of manufacturing a reinforced composite electrolyte membrane for water electrolysis according to a preferred embodiment.

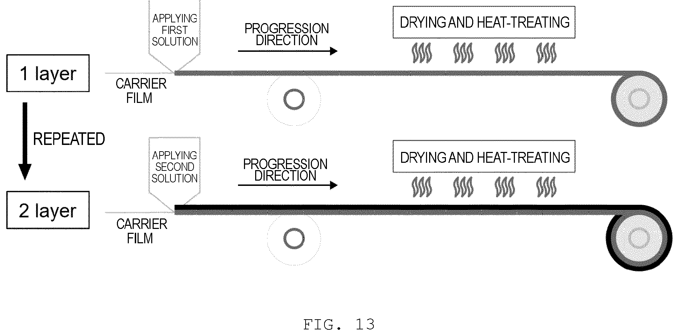

FIG. 13 shows a conceptual diagram illustrating a manufacturing process performed when two layers of a polymer material are stacked through an RTR process. This process is repeated when forming three or more layers. Under this method, to form a structure composed of four layers as shown on the left side of FIG. 10, a total of three RTR cycle processes are required, including applying a first layer, applying a second layer, attaching a third layer substrate, and applying a fourth layer.

However, the present invention has the advantage that membrane formation is possible with only two RTR cycle processes because, by controlling the pore size of the porous substrate and the particle size of the additives, even when only a first layer is applied, an intermediate layer of a second layer is naturally formed during the process of attaching and complexing a third layer substrate.

Specifically, the manufacturing method of the present invention includes: a step of preparing a porous substrate with controlled pore size and a hydrogen gas reduction additive with controlled particle size and distribution; a step of preparing an ionomer composition; a step of forming an ionomer layer through an RTR coating process; and a step of attaching the porous substrate to the ionomer layer to form a complex layer (complexing).

The porous substrate may include at least one fluorinated polymer, and the fluorinated polymer may be polytetrafluoroethylene (PTFE), poly(ethylene-co-tetrafluoroethylene) (EPTFE), expanded polytetrafluoroethylene (e-PTFE), polyvinylidene fluoride (PVDF), expanded polyvinylidene fluoride (e-PVDF), expanded poly(ethylene-co-tetrafluoroethylene) (eEPTFE), or a mixture thereof, and the porous substrate may preferably be expanded poly(ethylene-co-tetrafluoroethylene) (eEPTFE. The porous substrates may be manufactured by controlling the maximum pore size and average pore size, which may be controlled through the composition of precursor materials, process conditions, and the like during the e-PTFE preparation process.

The particle size and the particle size distribution of the additives are controlled. Specifically, the particle size distribution is configured to include a first additive having a particle size smaller than the maximum pore size of the porous substrate and a second additive having a particle size larger than the maximum pore size. While the overall distribution may be controlled, the particle size distribution may also be configured by separately preparing the first additive with a small particle size and the second additive with a large particle size, and then adjusting the mixing ratio therebetween. The particle size of the additives may be controlled through processes such as ball milling, and a targeted particle size distribution may be obtained depending on the combination of technical conditions such as the size of the beads used, the flow rate, the milling time, and the initial particle size.

A first mixture is prepared by mixing or complexing the hydrogen gas reduction additive including the first additive and the second additive having controlled particle size and distribution, with the first ionomer, and the resulting mixture is dispersed in a solvent to prepare a first ionomer composition.

The prepared first ionomer composition is applied to a base, such as a carrier film or a release film, through an RTR film-forming process as shown in FIG. 13 to form a first ionomer layer, and then drying and heat treatment are performed to an appropriate level.

A pore size-controlled porous substrate is attached to one surface of the first ionomer layer formed, and subsequently, the first ionomer composition is impregnated into the pores of the porous substrate by capillary effect to form a composite layer. At this time, since the fluidity of the first ionomer composition must be ensured to obtain a constant capillary force and impregnation speed, drying/heat treatment may be performed under relatively mild conditions during the formation of the first ionomer layer, or, when necessary, after complexing the porous substrate.

In the composite layer formation step, that is, during the complexing process between the ionomer layer and the porous substrate, the first additive in the first ionomer composition is contained in the first ionomer composition and impregnated into the porous substrate, whereas the second additive, which has a particle size larger than the maximum pore size of the porous substrate, is not impregnated into the porous substrate but is densely packed at the interface between the first ionomer layer and the porous substrate, thereby forming an intermediate layer in which the second additive is present at a high concentration. Through this, an effect of forming two layers can be obtained with only a single coating process.

In addition, a second ionomer layer may be formed on the other surface of the porous substrate, that is, on the surface opposite to the surface where the first ionomer layer is formed. The second ionomer layer is formed through an RTR coating process of the second ionomer composition in which the second ionomer is dispersed in a solvent. The complexing (composite layer formation) of the porous substrate may be performed entirely using only the first ionomer composition, or the second ionomer composition may be impregnated toward the other surface of the porous substrate during the process of forming the second ionomer layer so that both the first and second ionomer compositions participate in the composite layer formation.

The present invention provides a reinforced composite electrolyte membrane for water electrolysis manufactured by the above-described manufacturing method, and also provides a membrane-electrode assembly (MEA) and a water electrolysis system including the same.

Although embodiments of the present invention have been described above with reference to the attached drawings, those skilled in the art will understand that the present invention may be implemented in other specific forms without changing the technical concept or essential features of the invention. Therefore, the above-described embodiments should be understood as illustrative in all respects and not restrictive.

## Claims

1. A catalyst composite having a gas permeability reduction effect applied to a polymer electrolyte membrane for water electrolysis, the catalyst composite comprising:

   a catalyst including a platinum-only catalyst or a composite catalyst including platinum and a metal having a greater ionization tendency than platinum; and
   a functional support on which the catalyst is supported,
   wherein the functional support is one or more selected from:

   a) a support serving as an antioxidant;
   b) a support enhancing ion transport properties and catalyst activity;
   c) a support enhancing catalyst stability;
   d) a support having a function of modifying hydrophilicity or hydrophobicity of the polymer electrolyte membrane;
   e) a support having a function of enhancing water-holding capacity; and
   f) a support having a three-dimensional mesh structure enhancing durability and long-term stability of the polymer electrolyte membrane.

2. The catalyst composite having the gas permeability reduction effect according to claim 1, wherein the metal having a greater ionization tendency than platinum is one or more selected from barium (Ba), magnesium (Mg), aluminum (Al), manganese (Mn), zinc (Zn), chromium (Cr), iron (Fe), cadmium (Cd), cobalt (Co), nickel (Ni), tin (Sn), and lead (Pb), and the metal is complexed with the platinum.

3. The catalyst composite having the gas permeability reduction effect according to claim 1, wherein the support a) is one or more selected from $CeO_2$, $Ce_2O_3$, and $LaCeO_7$.

4. The catalyst composite having the gas permeability reduction effect according to claim 1, wherein the support b) is one or more selected from YSZ, SDC, LST, BYZ, BCZY, $Gd_2O_3$, $Nd_2O_3$, and $La_2Zr_2O_7$.

5. The catalyst composite having the gas permeability reduction effect according to claim 1, wherein the support c) is one or more selected from $IrO_2$, NiO, $SnO_2$, and $TiO_2$.

6. The catalyst composite having the gas permeability reduction effect according to claim 1, wherein the support e) is a polymer having a network or mesh structure and is a hydrogel polymer or a superabsorbent polymer (SAP).

7. The catalyst composite having the gas permeability reduction effect according to claim 1, wherein the functional support has a particle size of 1 $\mu$m or less.

8. A method of manufacturing a catalyst composite applied to a polymer electrolyte membrane for water electrolysis, comprising:

   a step of grinding a functional support to a particle size of 1 $\mu$m or less;
   a step of mixing the ground functional support, a platinum precursor, and a metal precursor having a greater ionization tendency than platinum in a specific ratio to form a mixture; and
   a step of reducing, drying, and heat-treating the mixture to complex the functional support with platinum and the metal having a greater ionization tendency than platinum.

9. An ionomer dispersion including a catalyst composite, the ionomer dispersion comprising:

a solid ionomer;
one or more solvents; and
the catalyst composite according to any one of claims 1 to 7.

10. The ionomer dispersion including the catalyst composite according to claim 9, wherein the ionomer dispersion has a pH of 3.0 or lower.

11. The ionomer dispersion including the catalyst composite according to claim 9, wherein the catalyst composite is included in an amount of 0.05% to 5% by weight based on the total weight of the ionomer dispersion.

12. A polymer electrolyte membrane comprising:

a porous support layer; and
an ionomer layer manufactured by impregnating and coating the porous support layer with the ionomer dispersion according to claim 9 and then drying the same.

13. A membrane-electrode assembly comprising the polymer electrolyte membrane according to claim 12.

14. A water electrolysis device comprising the membrane-electrode assembly according to claim 13.

FIG. 1

FIG. 2

● Pt or Pt-M

◗ FUNCTIONAL SUPPORT

FIG. 3

Neutral     Increase pH     Decrease pH     Swelling

FIG. 4

| STEP OF GRINDING FUNCTIONAL SUPPORT TO PARTICLE SIZE OF 500 NM OR LES | ⟿ S100 |

| MIXING THE GROUND FUNCTIONAL SUPPORT WITH PLATINUM PRECURSOR AND METAL PRECURSOR HAVING GREATER IONIZATION TENDENCY THAN PLATINUM AT SPECIFIC RATIO TO FORM MIXTURE | ⟿ S200 |

| COMLEXING THE MIXTURE BY REDUCING, DRYING, AND HEAT-TREATING THE SAME | ⟿ S300 |

FIG. 5

WATER ELECTROLYSIS
(PEMWE)

Anode :                                      Cathode :

$$H_2O \rightarrow 2H^+ + 2e^- + \frac{1}{2}O_2$$                     $$2H^+ + 2e^- \rightarrow H_2$$

IrO2
(Anode)

IONOMER
(ELETROLYTE
MEMBRANE)

Pt/C
(Anode)

$H_2O$

$\frac{1}{2}O_2$

$2H^+$

① ②

$H_2$

FIG. 6

# FUEL CELL
## (PEMFC)

Cathode :                    Anode :

$$2H^+ + 2e^- + \frac{1}{2}O_2 \rightarrow H_2O \qquad\qquad H_2 \rightarrow 2H^+ + 2e^-$$

| Pt/C (cathode) | IONOMER (ELETROLYTE MEMBRANE) | Pt/C (Anode) |

$H_2O$

$2H^+$

$\frac{1}{2}O_2$

①                    ②

$H_2$

FIG. 7

Anode : $H_2O \rightarrow 2H^+ + 2e^- + \dfrac{1}{2}O_2(g)$     Cathode : $2H^+ + 2e^- \rightarrow H_2(g)$

$H_2O$

| IrO2 (Anode) | IONOMER (ELETROLYTE MEMBRANE) | Pt/C (Anode) |

$2H^+$

$H_2(g)$

$\dfrac{1}{2}O_2(g)$

A     B ① B B ②     C

FIG. 8

Anode : $H_2O \rightarrow 2H^+ + 2e^- + \frac{1}{2}O_2(g)$          Cathode : $2H^+ + 2e^- \rightarrow H_2(g)$

FIG. 9

PORES OF POROUS SUBSTRATE

FOURTH LAYER

THIRD LAYER

SECOND LAYER

FIRST LAYER

DIRECTION OF CAPILLARY FORCE

THIRD LAYER

SECOND LAYER

FIRST LAYER

: POROUS SUBSTRATE

: HYDROGEN GAS REDUCTION ADDITIVE

: IONOMER COMPOSITION

FIG. 10

CATHODE
DIRECTION

$J_{H_2}$

$J_{O_2}$

ANODE
DIRECTION

<THICKNESS OF ELETROLYTE MEMBRANE FOR WATER ELECTROLYSIS>

FIG. 11

**Electron Image 421**

**Pt M series**

FIG. 12

APPLYING FIRST SOLUTION

PROGRESSION DIRECTION

DRYING AND HEAT-TREATING

1 layer

CARRIER FILM

REPEATED

APPLYING SECOND SOLUTION

PROGRESSION DIRECTION

DRYING AND HEAT-TREATING

2 layer

CARRIER FILM

FIG. 13

## INTERNATIONAL SEARCH REPORT

| International application No. |
|---|
| **PCT/KR2024/014550** |

**A.    CLASSIFICATION OF SUBJECT MATTER**

**B01J 35/30**(2024.01)i; **B01J 35/56**(2024.01)i; **B01J 23/42**(2006.01)i; **B01J 23/54**(2006.01)i; **B01J 37/00**(2006.01)i; **C25B 13/04**(2006.01)i; **C25B 1/04**(2006.01)i

According to International Patent Classification (IPC) or to both national classification and IPC

**B.    FIELDS SEARCHED**

Minimum documentation searched (classification system followed by classification symbols)

B01J 35/30(2024.01); B01J 23/46(2006.01); B01J 23/62(2006.01); B01J 23/652(2006.01); C01B 3/32(2006.01); C25B 1/04(2006.01); H01M 8/1004(2016.01); H01M 8/1018(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수전해(electrolysis), 고분자(polymer), 전해질 막(electrolyte membrane), 촉매 (catalyst), 백금(platinum), 가스 투과(gas permeability), 지지체(support), 함침(dipping)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0013431 A (HYUNDAI MOTOR COMPANY et al.) 04 February 2021 (2021-02-04) See paragraphs [0044], [0046], [0049]-[0056], [0058], [0059], [0061]-[0064], [0069]-[0084], [0086]-[0098] and [0100]-[0105]; and figures 2 and 3. | 1,3-5,7,9-14 |
| A | | 2,6,8 |
| Y | ZHAO, Jian et al. Gas permeability of catalyzed electrodes in polymer electrolyte membrane fuel cells. Applied Energy. 2018, vol. 209, pp. 203-210 (online publication: 04 November 2017). See abstract; page 207, left column, line 22 - right column, line 6; and figure 3. | 1,3-5,7,9-14 |
| Y | JP 2008-149313 A (SAMSUNG SDI CO., LTD.) 03 July 2008 (2008-07-03) See claims 1 and 2. | 3-5 |
| A | WO 2023-095791 A1 (UNIVERSITY OF YAMANASHI) 01 June 2023 (2023-06-01) See claims 1-8. | 1-14 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 January 2025** | **07 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/014550** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0073190 A (KOREA RESEARCH INSTITUTE OF CHEMICAL TECHNOLOGY) 03 June 2022 (2022-06-03)<br>        See claims 1-11. | 1-14 |

Form PCT/ISA/210 (second sheet) (July 2022)

## INTERNATIONAL SEARCH REPORT
### Information on patent family members

International application No.

**PCT/KR2024/014550**

| Patent document cited in search report | | | Publication date (day/month/year) | Patent family member(s) | | | Publication date (day/month/year) |
|---|---|---|---|---|---|---|---|
| KR | 10-2021-0013431 | A | 04 February 2021 | CN | 112310415 | A | 02 February 2021 |
| | | | | DE | 102020204481 | A1 | 28 January 2021 |
| | | | | US | 11545673 | B2 | 03 January 2023 |
| | | | | US | 12009528 | B2 | 11 June 2024 |
| | | | | US | 2021-0028467 | A1 | 28 January 2021 |
| | | | | US | 2023-0084103 | A1 | 16 March 2023 |
| JP | 2008-149313 | A | 03 July 2008 | CN | 101204656 | A | 25 June 2008 |
| | | | | JP | 5279227 | B2 | 04 September 2013 |
| | | | | KR | 10-0818262 | B1 | 01 April 2008 |
| | | | | US | 2008-0219918 | A1 | 11 September 2008 |
| WO | 2023-095791 | A1 | 01 June 2023 | CA | 3238436 | A1 | 01 June 2023 |
| | | | | CN | 118302563 | A | 05 July 2024 |
| | | | | EP | 4438772 | A1 | 02 October 2024 |
| KR | 10-2022-0073190 | A | 03 June 2022 | None | | | |

Form PCT/ISA/210 (patent family annex) (July 2022)